# EUROPÄISCHE PATENTANMELDUNG

(11) **EP 1 359 713 A1**
(43) Veröffentlichungstag der Anmeldung: **05.11.2003**
(21) Anmeldenummer: 02009989.1
(22) Anmeldetag: 03.05.2002
(51) Int. Cl.: H04L 12/28

(54) **Verfahren zum Steuern von Verbindungen über Netzübergangseinheiten**

(71) Anmelder: SIEMENS AKTIENGESELLSCHAFT, 80333 München (DE)
(72) Erfinder: Arnold, Robert, Dr., 09423 Gelenau (DE); Kreten, Axel, 82178 Puchheim (DE); Schoepf, Johannes, 82256 Fuerstenfeldbruck (DE)

(57) **Zusammenfassung**

Um Teilnehmern des herkömmlichen öffentlichen Telefonnetzes PSTN Zugang zum Internet (IP core) zu ermöglichen, werden häufig Wählverbindungen über in Netzübergängen (MG) angeordnete Netzübergangseinheiten (MODEM) genutzt. Die vorliegende Erfindung sieht ein Verfahren zum Steuern von Verbindungen über in einem Netzübergang (MG) eines Telefonnetzes (PSTN) in ein Datennetz (IP core) angeordnete Netzübergangseinheiten (MODEM), die über mindestens zwei verschiedene Rufnummern (ISP-DN) erreichbar sind, vor, demgemäß alle über die Netzübergangseinheiten (MODEM) geführten Verbindungen sowie alle über die Netzübergangseinheiten (MODEM) zu führenden angeforderten Verbindungen über dasselbe Leitungsbündel (TG) zum Netzübergang (MG) geleitet werden und unter einer Rufnummer (ISP-DN) angeforderte Verbindungen in Abhängigkeit von der aktuellen Anzahl (CTR) unter dieser Rufnummer (ISP-DN) geführter Verbindungen und einer je Rufnummer (ISP-DN) vorgebbaren maximalen Anzahl (THR) gleichzeitig zugelassener Verbindungen abgewiesen oder angenommen werden. Dieses Verfahren erlaubt eine vereinfachte, flexible und effektive Nutzung der Netzübergangseinheiten (MODEM).

## Beschreibung

Verfahren zum Steuern von Verbindungen über Netzübergangseinheiten, insbesondere zum Einsatz in Telekommunikationsnetzen

Um Teilnehmern des herkömmlichen öffentlichen Telefonnetzes PSTN (für: Public Switched Telephone Network) Zugang zum Internet zu ermöglichen, werden häufig Wählverbindungen genutzt. Diese sind dadurch charakterisiert, daß der Teilnehmer mittels einer geeigneten Vorrichtung, beispielsweise mittels eines Modems oder eines ISDN Adapters, eine Wählverbindung aufbaut, an deren anderen Ende eine geeignete Gegenstelle, beispielsweise wiederum ein Modem, mit der Vorrichtung des Teilnehmers kommuniziert und Datenverkehr von und zum Teilnehmer entsprechend weitergeleitet wird.

Mehrere solcher Gegenstellen, im folgenden als Netzübergangseinheiten bezeichnet, werden üblicherweise in bestimmten Netzübergängen an der Netzgrenze zwischen PSTN und dem Internet zusammengefaßt. Diese Netzübergänge werden im folgenden auch Übergabepunkt genannt, wenn ein solcher Netzübergang den Übergabepunkt zwischen dem Betreiber des PSTN und dem Internet-Diensteanbieter ISP (für: Internet Service Provider) bildet. Eine weitere, in der Technik verwendete Bezeichnung für diese Übergabepunkte ist POP (für: Point of Presence). Der Betreiber des PSTN kann vom Internet-Diensteanbieter verschieden sein. Am Übergabepunkt bzw. POP wird folglich der Teilnehmerverkehr vom Betreiber des PSTN an den Internet-Diensteanbieter und umgekehrt übergeben. Dabei wird häufig so verfahren, daß der Internet-Diensteanbieter an einem beliebigen Übergabepunkt den Internet-Datenverkehr des Teilnehmers übernimmt bzw. einspeist, d.h. die Netzübergangseinheiten, z.B. die Modems, sind dem Betreiber des PSTN zugeordnet.

Ein Teilnehmer, dem von einem bestimmten PSTN-Betreiber ein Telefonanschluß bereitgestellt wird, wählt durch Vorgabe einer entsprechenden Einwahlrufnummer an seinem Datenendgerät, beispielweise ein PC, einen von mehreren Internet-Diensteanbietern aus, um Zugang zum Internet zu erhalten. Mit Hilfe einer geeigneten Vorrichtung, z.B. mit Hilfe eines Modems, wird eine Verbindung zu den Netzübergangseinheiten aufgebaut. Die vom Datenendgerät des Teilnehmers übertragenen Internet-Daten werden beispielsweise durch das Modem geeignet kodiert und moduliert, über die Teilnehmeranschlußleitung an die dem Teilnehmer zugeordnete Ortsvermittlungsstelle und von dort an die Netzübergangseinheiten des PSTN-Betreibers am Übergabepunkt des gewählten Internet-Diensteanbieters weitergeleitet. Durch die Netzübergangseinheiten - für dieses Beispiel ebenfalls Modems - werden die Internet-Daten demoduliert und dekodiert und an den Internet-Diensteanbieter übergeben.

Ist ein Netzübergang, welcher der Übergabepunkt eines ersten Internet-Diensteanbieters ist, gleichzeitig der Übergabepunkt weiterer Internet-Diensteanbieter, so sind in diesem Netzübergang für jeden Internet-Diensteanbieter gesondert Netzübergangseinheiten bereitzustellen, die dann für Teilnehmer durch Verwenden einer entsprechenden Einwahlrufnummer adressiert werden. Wie viele Netzübergangseinheiten für jeden der Internet-Diensteanbieter bereitzustellen sind, ist beispielsweise abhängig von der erwarteten Anzahl von Teilnehmern, die zu einem gegebenen Zeitpunkt, beispielsweise in der Hauptverkehrsstunde bzw. busy hour, über einen gegebenen Internet-Diensteanbieter mit dem Internet verbunden sind bzw. einen Verbindungsaufbau zu diesem Internet-Diensteanbieter versuchen.

Bisher wurde das sich daraus ergebende Problem der Zuordnung von Netzübergangseinheiten gelöst, indem Netzübergangseinheiten statisch den einzelnen Internet-Diensteanbietern zugeordnet wurden, d.h. die für einen bestimmten Internet-Diensteanbieter vorgesehenen Netzübergangseinheiten werden über fest eingerichtete Leitungsbündel mit dem restlichen leitungsvermittelnden PSTN verbunden, und für jeden Internet-Diensteanbieter werden gesonderte Leitungsbündel vorgesehen.

Von Nachteil ist dabei, daß bei dieser statischen Zuordnung in der Regel für jeden Internet-Diensteanbieter gesondert Überkapazitäten vorgesehen werden müssen, damit auch während der Hauptverkehrsstunde eine möglichst geringe Zahl erfolgloser Verbindungsanforderungen zu dem Internet-Diensteanbieter gewährleistet ist. Unterschiedliche zeitliche und/oder regionale Hauptverkehrsstunden, die ggf. bei verschiedenen Internet-Diensteanbietern zu verschiedenen Zeiten auftreten, können mit dieser statischen Zuordnung nicht ausgeglichen werden. Darüber hinaus ist es sehr aufwendig, einem Internet-Diensteanbieter zusätzliche Netzübergangseinheiten zur Verfügung zu stellen bzw. von einem Internet-Diensteanbieter-auch kurzzeitig - zurückgegebene Netzübergangseinheiten anderweitig zuzuordnen. Ebenfalls aufwendig ist die Versorgung an einem Übergabepunkt neu hinzukommender Internet-Diensteanbieter mit Netzübergangseinheiten sowie die komplette Ausgliederung eines Internet-Diensteanbieters an einem Übergabepunkt.

Die der vorliegenden Erfindung zugrundeliegende Aufgabe besteht darin, die Netzübergangseinheiten effektiver und flexibler zu nutzen.

Diese Aufgabe wird durch ein Verfahren zum Steuern von Verbindungen über Netzübergangseinheiten gemäß der Merkmale des Patentanspruchs 1 gelöst.

Bevorzugte Ausführungsformen sind Gegenstand der abhängigen Ansprüche.

Erfindungsgemäß wird die Aufgabe durch ein Verfahren zum Steuern von Verbindungen über in einem Netzübergang eines Telefonnetzes in ein Datennetz angeordnete Netzübergangseinheiten, die über mindestens zwei verschiedene Rufnummern oder Rufnummerngruppen erreichbar sind, gelöst, demgemäß
- alle über die Netzübergangseinheiten geführten Verbindungen sowie alle über die Netzübergangseinheiten zu führenden angeforderten Verbindungen über dasselbe Leitungsbündel zum Netzübergang geleitet werden, und
- unter einer Rufnummer oder Rufnummerngruppe angeforderte Verbindungen in Abhängigkeit von der aktuellen Anzahl unter dieser Rufnummer oder Rufnummerngruppe geführter Verbindungen und einer je Rufnummer oder Rufnummerngruppe vorgebbaren maximalen Anzahl gleichzeitig zugelassener Verbindungen abgewiesen oder angenommen werden.

Besonders vorteilhaft können in einer Netzwerkanordnung, bei der der Netzübergang durch ein Steuerungselement mittels eines Steuerungsprotokolls gesteuert wird, im Steuerungselement bereits vorhandene steuernde Schwellwerte zur Überwachung der aktuellen Anzahl unter einer Rufnummer geführter Verbindungen unter Berücksichtigung der je Rufnummer vorgebbaren maximalen Anzahl gleichzeitig zugelassener Verbindungen verwendet werden, wobei im Ergebnis dieser Überwachung vom Steuerungselement an eine Vermittlungsstelle des Telefonnetze das Annehmen oder das Abweisen einer Verbindungsanforderung unter der Rufnummer signalisiert wird.

Das erfindungsgemäße Verfahren weist gegenüber herkömmlichen Verfahren zur Zuordnung von Netzübergangseinheiten zu verschiedenen Internet-Diensteanbietern in einem Netzübergang den Vorteil auf, daß die Netzübergangseinheiten den Internet-Diensteanbietern dynamisch zugeordnet werden können. Dies wird dadurch erreicht, daß Verbindungsanforderungen zu allen Internet-Diensteanbietern, deren Übergabepunkt der jeweilige Netzübergang ist, über dasselbe Leitungsbündel geleitet werden. Die Zuordnung der Verbindungsanforderungen zu den einzelnen Internet-Diensteanbietern erfolgt vorteilhaft in dem Steuerungselement, durch welches dann eine Entscheidung getroffen wird, ob die Verbindungsanforderung abgewiesen oder angenommen wird.

Daraus ergibt sich in ein wesentlich verbesserter Ausnutzungsgrad der vorhandenen Netzübergangseinheiten, indem beispielsweise durch den Betreiber des PSTN in einem bestimmten Netzübergang Internet-Diensteanbieter versorgt werden, deren jeweilige Hauptverkehrsstunden zu verschiedenen Zeiten auftreten. Dies kann durch den Betreiber des PSTN z.B. durch eine geeignete Tarifierung gesteuert werden.

Weiterhin ist es möglich, Internet-Diensteanbietern für verschiedene Zeiträume verschiedene Kontingente von Netzübergangseinheiten zuzuordnen, beispielsweise gesondert nach Zeit und/oder Wochentagen. Damit kann der Betreiber des PSTN äußerst flexibel auf die Anforderungen verschiedener Internet-Diensteanbieter reagieren.

Gleichermaßen können Ein- und Ausgliederungen von Internet-Diensteanbietern an einem bestimmten Übergabepunkt problemlos vorgenommen werden, ebenso wie Verringerungen oder Aufstockungen des durch die Internet-Diensteanbieter gebuchten Kontingents von Netzübergangseinheiten.

Unter Verwendung der vorliegenden Erfindung läßt sich diese flexible, dynamische Verwaltung von Netzübergangseinheiten vorteilhaft ohne zusätzliche Hardware-Komponenten und in bevorzugter Weise mit geringen Änderungen der Software-Komponenten des Steuerungselementes oder des Netzübergangs MG oder der Vermittlungsstelle VS realisieren.

Im folgenden wird das erfindungsgemäße Verfahren anhand eines Ausführungsbeispiels im Zusammenhang mit 3 Zeichnungen näher erläutert. Dabei zeigen:
- Figur 1: eine schematische Darstellung einer Netzwerkanordnung an einer Netzgrenze zwischen einem Telefonnetz und einem Datennetz,
- Figur 2a: eine schematische Darstellung des erfindungsgemäßen Verfahrens beim Aufbau einer Verbindung,
- Figur 2b: eine schematische Darstellung des erfindungsgemäßen Verfahrens beim Abbau einer Verbindung.

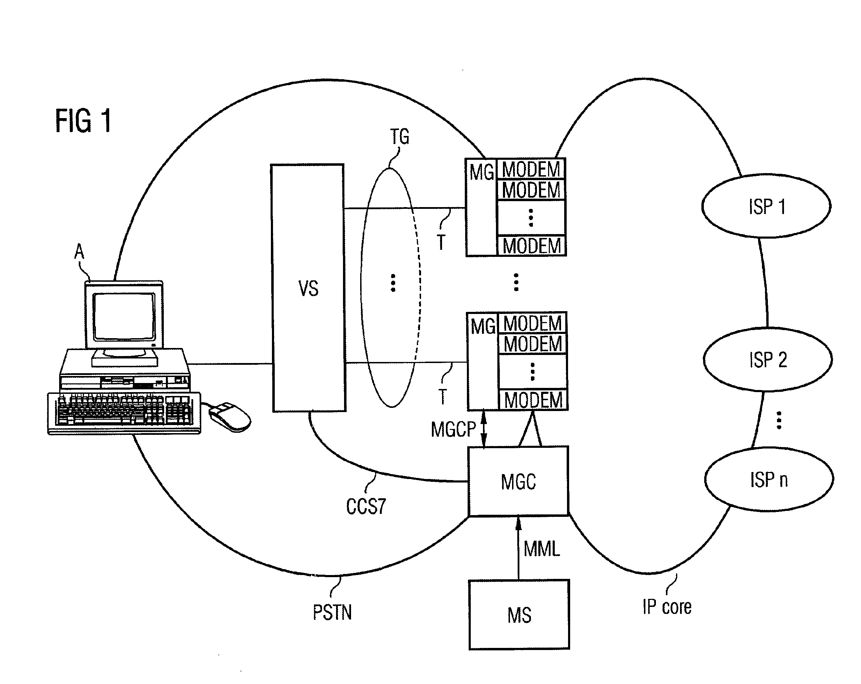

In Figur 1 ist eine Netzwerkanordnung mit einer Netzgrenze zwischen einem Telefonnetz und einem Datennetz schematisch dargestellt. Bei dem Telefonnetz handelt es sich beispielsweise um das öffentliche Telefonnetz PSTN, während das Datennetz beispielsweise das Internet IP core sein kann.

Angeschlossen an das Telefonnetz PSTN ist ein Datenendgerät A eines Teilnehmers. Dieses Datenendgerät A kann z.B. ein PC oder eine datennetzfähige Settop-Box sein und wird vom Teilnehmer auch zum Betrachten von Datennetzinhalten verwendet. Der Anschluß des Datenendgerätes A erfolgt vorzugsweise in Form eines klassischen analogen Telefonanschlusses oder in Form eines ISDN-Anschlusses - nicht dargestellt. Das Datenendgerät weist abhängig von der Art des Anschlusses ein Modem oder einen ISDN-Adapter auf - nicht dargestellt. Möglich ist ebenfalls, daß das Datenendgerät A zum Zwecke des Anschlusses an das Telefonnetz PSTN beispielsweise über eine lokale Netzwerkverbindung mit einem Einwahlrouter verbunden ist, wobei dann ein Gerät oder eine Baugruppe mit der Funktionalität eines Modems oder eines ISDN-Adapters in diesen Einwahlrouter integriert oder an diesen angeschlossen ist - nicht dargestellt.

Das Telefonnetz PSTN umfaßt mindestens eine Vermittlungsstelle VS, mit der der analoge oder digitale Telefonanschluß des Teilnehmers über das Telefonnetz PSTN in der Regel mittels weiterer - nicht dargestellter - Vermittlungsstellen, z.B. Ortsvermittlungsstelle, Transitvermittlungsstelle, verbunden ist. Die Vermittlungsstelle VS ist außerdem über eine Signalisierungsverbindung CCS7 (für: Common Channel Signaling System 7) mit einem Steuerungselement MGC (für: Media Gateway Controller) verbunden. Über die Signalisierungsverbindung CCS7 werden in einem bevorzugten Ausführungsbeispiel Nachrichten gemäß des CCS7 Signalisierungsprotokolls ausgetauscht. Andere Signalisierungsprotokolle sind im Rahmen dieser Erfindung gleichfalls einsetzbar.

Ebenfalls an die Vermittlungsstelle VS angeschlossen sind ein oder mehrere Netzübergänge MG, wobei diese Netzübergänge in einer vorteilhaften Ausprägung als sogenannte Media Gateways MG ausgeführt sind. Diese Netzübergänge MG werden an die Vermittlungsstelle VS über Anschlußleitungen bzw. Trunks T angeschlossen, wobei ein Trunk T oder mehrere Trunks T ein Leitungsbündel bzw. eine Trunk Group TG bilden.

Die Netzübergänge MG sind an der Netzgrenze zwischen Telefonnetz PSTN und Datennetz IP core angeordnet und bestehen-stark vereinfacht - aus Steuerungmitteln und einer Gruppe bzw. einem Pool von Netzübergangseinheiten MODEM. Diese Netz-übergangseinheiten MODEM bilden das netzseitige Gegenstück zu dem im Datenendgerät A des Teilnehmers zum Anschluß an das Telefonnetz PSTN verwendeten Gerät, d.h. das Gegenstück zu einem Modem oder einem ISDN Adapter. Die Netzübergangseinheiten MODEM dienen dazu, die vom Datenendgerät A des Teilnehmers empfangenen Signale zu demodulieren und zu dekodieren und die demodulierten und dekodierten Daten an eine übergeordnete Vorrichtung zur weiteren Übermittlung/Verarbeitung zu übergeben. Die Gruppe der Netzübergangseinheiten MODEM in einem Netzübergang MG wird mitunter auch als Modem Pool bezeichnet. In Figur 1 dargestellt sind zwei Netzübergänge MG mit jeweils mehreren Netzübergangseinheiten MODEM.

Alle Netzübergänge MG werden durch ein oder mehrere Steuerungselemente MGC gesteuert. In Figur 1 ist ein Steuerungselement MGC beispielhaft dargestellt. Zwischen den Netzübergängen MG und dem Steuerungselement MGC besteht eine Steuerungsverbindung, für welche ein Steuerungsprotokoll MGCP verwendet wird. In einer bevorzugten Ausführung wird als Steuerungselement ein Media Gateway Controller MGC und als Steuerungsprotokoll MGCP das Media Gateway Control Protocol verwendet; andere, auch nicht standardisierte Steuerungsprotokolle können im Rahmen dieser Erfindung ebenfalls eingesetzt werden.

Das Steuerungselement MGC ist in einer Ausprägung von einem Management System MS über bekannte Schnittstellen mittels einer Kommandosprache MML administrierbar. Statusinformationen und andere Daten können vom Steuerungselement MGC an das Management System MS übermittelt werden - nicht dargestellt. Das Management System MS dient im Wesentlichen dazu, beispielsweise von einem Netzwerkmanagementzentrum aus das Steuerungselement MGC und die an das Steuerungselement MGC angeschlossenen Netzübergänge MG sowie die Netzübergangseinheiten MODEM der Netzübergänge MG und weitere - nicht dargestellte-Steuerungselemente und deren untergeordnete Komponenten zu überwachen und zu administrieren. Die Überwachung und Beeinflussung kann dabei durch automatische, beispielsweise programmgesteuerte Verfahren oder durch administrative Eingaben erfolgen.

Ebenfalls in Figur 1 schematisch dargestellt sind Teilnetze mehrerer Internet-Diensteanbieter ISP 1, ISP 2, .. ISP n (ISP für: Internet Service Provider). Diese Teilnetze der Internet-Diensteanbieter ISP 1, ISP 2, .. ISP n sind mit dem Datennetz IP core verbunden. Das Datennetz IP core ist in einem bevorzugten Ausführungsbeispiel das Internet oder ein anderes, auf dem Internetprotokoll IP oder einem vergleichbaren Protokoll basierendes Datennetz. Die tatsächliche technische Anbindung verschiedener Server der Internet-Diensteanbieter ISP 1, ISP 2, .. ISP n (z.B. Remote Authentication Dial-In User Service bzw. RADIUS Server, Webserver, Proxy Server) und weiterer Komponenten (z.B. Switches, Firewalls) und der logische Aufbau der den jeweiligen Internet-Diensteanbietern ISP 1, ISP 2, .. ISP n zugeordneten Teilnetzen (z.B. als private Netze mit wenigen Übergangspunkten in das Datennetz IP core oder als Netz, dessen Komponenten alle direkt aus dem Datennetz IP core erreichbar sind) ist für die vorliegende Erfindung von untergeordneter Bedeutung. Wesentlich ist lediglich, daß das Datennetz IP core, dessen Bestandteile auch die Netzübergänge MG und zumindest jeweils eine Komponente der Teilnetze der Internet-Diensteanbieter ISP 1, ISP 2, .. ISP n sind, so konfiguriert oder durch geeignete Mechanismen bei Verbindungsanforderung ad-hoc konfigurierbar ist, daß eine Verbindung zwischen den Netzübergängen MG und den Teilnetzen der Internet-Diensteanbieter ISP 1, ISP 2, .. ISP n hergestellt werden kann.

Mit der im Zusammenhang mit Figur 1 beschriebenen Netzwerkanordnung ist es dem Teilnehmer, dem von einem bestimmten Telefonnetz-Betreiber ein Telefonanschluß bereitgestellt wird, möglich, durch Vorgabe einer entsprechenden Einwahlrufnummer an seinem Datenendgerät A einen der Internet-Diensteanbieter ISP 1, ISP 2, .. ISP n auszuwählen, um Zugang zum Angebot eines der Internet-Diensteanbieter ISP 1, ISP 2, .. ISP n und ggf. auch Zugang zu anderen Datennetzangeboten, z.B. zu bestimmten oder allen Internetinhalten, zu erhalten. Mit Hilfe einer der im Zusammenhang mit dem Datenendgerät A beschriebenen Vorrichtungen, z.B. mittels Modem, wird über das Telefonnetz PSTN ein Verbindungsaufbau zu den Netzübergangseinheiten MODEM eingeleitet, mit dem Ziel, eine Datenverbindung zum gewählten Internet-Diensteanbieter ISP 1, ISP 2, .. ISP n herzustellen.

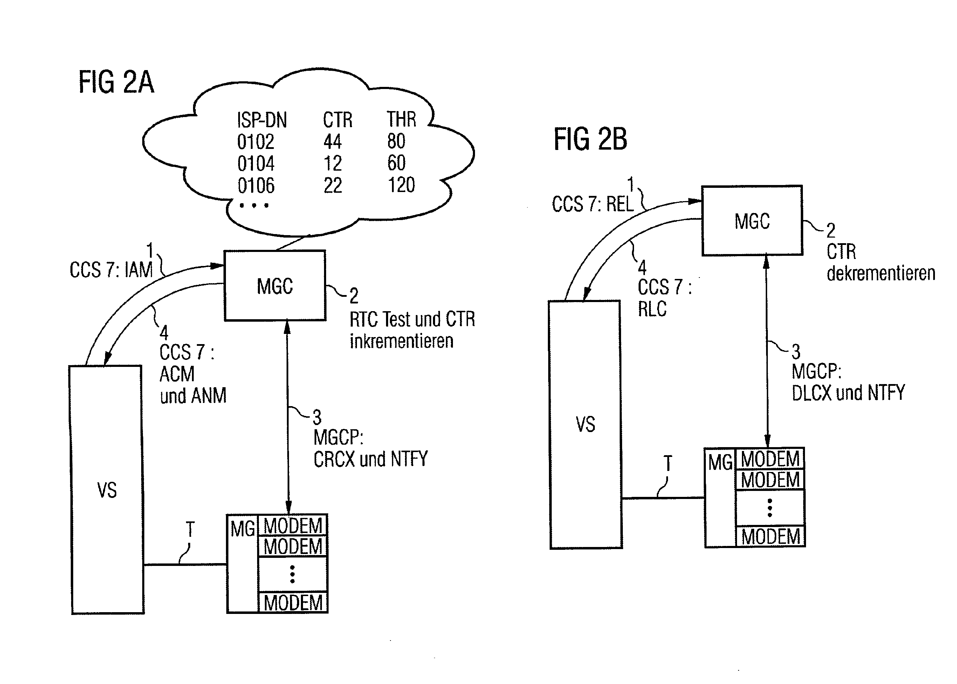

Erfindungsgemäß werden alle Verbindungsanforderungen, die einen der Internet-Diensteanbieter ISP 1, ISP 2, .. ISP n betreffen, deren Übergabepunkt die Vermittlungsstelle VS ist, im Telefonnetz PSTN an die Vermittlungsstelle VS geleitet. Durch die Vermittlungsstelle VS werden die Verbindungsanforderungen an das Steuerungselement MGC signalisiert, wie später im Zusammenhang mit Figur 2 erläutert. Wird die Verbindungsanforderung durch das Steuerungselement MGC akzeptiert, wird die Verbindung zu einem der Netzübergänge MG über das Leitungsbündel TG und innerhalb des gewählten Netzübergangs MG zu einer freien Netzübergangseinheit MODEM durchgeschaltet. Wird die Verbindung durch das Steuerungselement MGC abgewiesen, wird die Verbindung durch die Vermittlungsstelle VS rückwärts ausgelöst.

An dieser Stelle wird ein bereits erwähnter wichtiger Vorteil des erfindungsgemäßen Verfahrens deutlich. Die Kontingente an Netzübergangseinheiten MODEM und die Netzübergänge MG sind nicht fest bestimmten Internet-Diensteanbietern ISP 1, ISP 2, .. ISP n zugeordnet, sondern werden dynamisch zugewiesen, wobei die Steuerung der Zuweisung durch das Steuerungselement MGC erfolgt, wie später im Zusammenhang mit Figur 2 beschrieben.

Nachdem die Verbindung im Telefonnetz PSTN vom Datenendgerät A des Teilnehmers zu einer der Netzübergangseinheiten MODEM durchgeschaltet ist, können Daten zwischen Datenendgerät A und dem Datennetz IP core ausgetauscht werden. Zunächst werden im Regelfall Zugangsberechtigungen überprüft, indem die Zugangsdaten des Teilnehmers vom Datenendgerät A an einen entsprechenden Server, beispielsweise einen RADIUS Server des ausgewählten Internet-Diensteanbieters ISP 1, ISP 2, .. ISP n, übertragen und dort verifiziert werden. Dazu werden die vom Datenendgerät A übertragenen Zugangsdaten des Teilnehmers beispielsweise durch das Modem geeignet kodiert und moduliert, über die Teilnehmeranschlußleitung an die dem Teilnehmer zugeordnete Ortsvermittlungsstelle übertragen, von dort an die oben beschriebene Vermittlungsstelle VS und über das Leitungsbündel TG an einen der Netzübergänge MG, dann an eine der Netzübergangseinheiten MODEM geleitet, durch die Netzübergangseinheiten MODEM - für dieses Beispiel ebenfalls ein Modem - demoduliert und dekodiert und an den gewählten Internet-Diensteanbieter ISP 1, ISP 2, .. ISP n weitergeleitet.

Nach erfolgreicher Überprüfung der Zugangsdaten des Teilnehmers ist es dem Teilnehmer dann möglich, Inhalte des Datennetzes IP core zu betrachten bzw. auf seinem Datenendgerät A zu speichern oder Daten von seinem Datenendgerät A auf einem Server im Datennetz IP core abzulegen. Dabei ist es für die vorliegende Erfindung unerheblich, ob dabei dem Teilnehmer alle Inhalte des Datennetzes zugänglich sind oder ob der Teilnehmer beispielsweise nur Zugriff auf Inhalte hat, die im (privaten) Teilnetz des Internet-Diensteanbieters vorgehalten werden.

Figuren 2a und 2b zeigen entsprechend für Verbindungsaufbau und Verbindungsabbau schematisch einen Teil der Abläufe zwischen der Vermittlungsstelle VS, dem Steuerungselement MGC und dem Netzübergang MG.

Figur 2a zeigt die Vermittlungsstelle VS, das Steuerungselement MGC, die Signalisierungsverbindung CCS7 zwischen Vermittlungsstelle VS und Steuerungselement MGC, einen der Netzübergänge MG mit mehreren Netzübergangseinheiten MODEM und die Steuerungsverbindung zwischen Steuerungselement MGC und dem Netzübergang MG, für welche das Steuerungsprotokoll MGCP verwendet wird.

Figur 2a zeigt ferner eine im Steuerungselement MGC vorgehaltene Tabelle, die zu jeder Einwahlrufnummer ISP-DN (für: Internet Service Provider Destination Number) eines der Internet-Diensteanbieter ISP 1, ISP 2, .. ISP n einen Zähler CTR (für: Counter) für die aktuell unter dieser Einwahlrufnummer ISP-DN bestehenden Verbindungen sowie einen Schwellwert THR (für: Threshold), der die maximal zulässige Anzahl von gleichzeitigen Verbindungen unter dieser Einwahlrufnummer ISP-DN angibt, vorsieht.

Beispielsweise sei dem ersten Internet-Diensteanbieter ISP 1 eine erste Einwahlrufnummer ISP-DN1 0102 zugeordnet. Aktuell sind im zugeordneten ersten Zähler CTR1 44 Verbindungen vermerkt, die unter der ersten Einwahlrufnummer ISP-DN1 geführt werden. Der ersten Einwahlrufnummer ISP-DN1 sei ein Schwellwert THR1 von 80 gleichzeitig zugelassenen Verbindungen zugewiesen. In gleicher Weise bestehen unter einer dem zweiten Internet-Diensteanbieter ISP 2 zugeordneten zweiten Einwahlrufnummer ISP-DN2 0104 aktuell CTR2=12 von maximal zugelassenen THR2=60 Verbindungen, und unter einer ebenfalls dem ersten Internet-Diensteanbieter ISP 1 zugeordneten dritten Einwahlrufnummer ISP-DN3 0106 bestehen aktuell CTR3=22 von maximal zugelassenen THR3=120 Verbindungen. Als Tabelle ausgedrückt:

| ISP | ISP-DN | CTR | THR |
|---|---|---|---|
| 1 | 0102 | 44 | 80 |
| 2 | 0104 | 12 | 60 |
| 1 | 0106 | 22 | 120 |

Der Media Gateway Controller weist ein Verfahren zur Überwachung von routenbezogenen Schwellwerten bzw. Route Thresholds RT auf, allgemein als Route Threshold Controls RTC bezeichnet, welches vorteilhaft zur Umsetzung des erfindungsgemäßen Verfahrens benutzt wird. Eine Route im hier verwendeten Sinn wird durch das Leitungsbündel TG, über welches die eine Verbindung geleitet wird, und durch die Zielrufnummer bzw. Einwahlrufnummer gebildet. Da alle Verbindungen für die betrachteten Zielrufnummern über dasselbe Leitungsbündel TG geleitet werden, kann anhand der Zielrufnummer die betreffende Route einfach und eindeutig bestimmt werden, und jeder Route und damit jeder der betrachteten Zielrufnummern bzw. Einwahlrufnummern kann ein routenbezogener Schwellwert RT zugeordnet werden. Diese routenbezogenen Schwellwerte RT werden verwendet, um die obengenannten Schwellwerte THR1..THR3 zu bilden. Die genannten Zähler CTR sind dabei die Zähler, die von dem Überwachungsverfahren im Media Gateway Controller verwendet werden.

In Fortsetzung des obenstehenden Beispiels wird im folgenden im Zusammenhang mit Figur 2a der Signalisierungsablauf für eine Verbindungsanforderung unter einer der Einwahlrufnummern ISP-DN erläutert. Die Verbindungsanforderung wird durch das Telefonnetz PSTN bis zur Vermittlungsstelle VS weitergeleitet - nicht dargestellt, von wo aus in Schritt 1 eine CCS7:IAM (für: Initial Address Message) Nachricht von der Vermittlungsstelle VS zum Steuerungselement MGC gesendet wird. Im Steuerungselement MGC wird in Schritt 2 erfindungsgemäß die der in der CCS7:IAM übertragenen Einwahlrufnummer ISP-DN zugeordneten RTC überprüft. Falls der entsprechende Zähler CTR den Schwellwert THR bereits erreicht hat, d.h. CTR n = THR n für die Einwahlrufnummer ISP-DN n, wird die Verbindungsanforderung durch das Senden einer Nachricht CCS7:REL (für: Release Message) abgewehrt; ein entsprechender Parameter dieser Nachricht (Release Cause) kann so gesetzt werden, daß der Grund für das Abwehren der Verbindungsanforderung beim Teilnehmer signalisiert wird.

Falls der entsprechende Zähler CTR den Schwellwert THR noch nicht erreicht hat, d.h. CTR n < THR n für die Einwahlrufnummer ISP-DN n, wird der entsprechende Zähler CTR inkrementiert. In Schritt 3 werden anschließend die Nachrichten MGCP:CRCX (für: Create Connection) und MGCP:NTFY (für: Notify) zwischen dem Steuerungselement MGC und dem Netzübergang MG ausgetauscht, und in Schritt 4 werden die Nachrichten CCS7:ACM (für: Address Complete Message) und CCS7:ANM (für: Answer Message) vom Steuerungselement MGC an die Vermittlungsstelle VS gesendet. Damit ist die Verbindung hergestellt. (Auf die Darstellung der Vorgänge zur Auswahl einer freien Netzübergangseinheit MODEM durch den Netzübergang MG sowie zur Auswahl der korrekten Anschlußleitung T im Leitungsbündel TG und zur Auswahl eines Zeitschlitzes auf der Anschlußleitung T wird an dieser Stelle zur Vereinfachung der Erläuterungen verzichtet.)

Figur 2b zeigt wiederum die Vermittlungsstelle VS, das Steuerungselement MGC, die Signalisierungsverbindung CCS7 zwischen Vermittlungsstelle VS und Steuerungselement MGC, den Netzübergang MG mit mehreren Netzübergangseinheiten MODEM und die Steuerungsverbindung zwischen Steuerungselement MGC und dem Netzübergang MG, für welche das Steuerungsprotokoll MGCP verwendet wird.

Der in Figur 2b dargestellte Signalisierungsablauf betrifft das durch den Teilnehmer veranlaßte Trennen einer bestehenden Verbindung. Der Verbindungsabbau wird durch das Telefonnetz PSTN bis zur Vermittlungsstelle VS weitergeleitet - nicht dargestellt, von wo aus in Schritt 1 eine CCS7:REL (für: Release Message) Nachricht von der Vermittlungsstelle VS zum Steuerungselement MGC gesendet wird. Im Steuerungselement MGC wird in Schritt 2 erfindungsgemäß der der entsprechenden Einwahlrufnummer ISP-DN zugeordnete Zähler CTR dekrementiert. In Schritt 3 werden anschließend die Nachrichten MGCP:DLCX (für: Delete Connection) und MGCP:NTFY (für: Notify) zwischen dem Steuerungselement MGC und dem Netzübergang MG ausgetauscht, und in Schritt 4 wird die Nachricht CCS7:RLC (für: Release Complete Message) vom Steuerungselement MGC an die Vermittlungsstelle VS gesendet. Damit ist die Verbindung abgebaut bzw. ausgelöst. (Auf die Darstellung der Vorgänge zur Freigabe der verwendeten Netzübergangseinheit MODEM durch den Netzübergang MG wird an dieser Stelle zur Vereinfachung der Erläuterungen verzichtet.)

Die Erfindung ist nicht auf das erläuterte Ausführungsbeispiel beschränkt. Beispielsweise können andere Protokolle, die zur Signalisierung in Kommunikationsnetzen geeignet sind, unverändert oder mit geringen Modifikationen verwendet werden, um die gemäß der vorliegende Erfindung zu übertragenden Daten zu transportieren.

Wie bereits erwähnt, kann das Steuerungselement MGC durch ein Management System MS administriert werden. Erfindungsgemäß wird dies genutzt, um die Schwellwerte THR zu verändern, beispielsweise zeitabhängig. Daraus ergibt sich der bereits genannte Vorteil des verbesserten Ausnutzungsgrades der vorhandenen Netzübergangseinheiten, indem beispielsweise durch den Betreiber des PSTN in einem bestimmten Netzübergang MG Internet-Diensteanbieter ISP 1, ISP2, .. ISP n versorgt werden, deren jeweilige Hauptverkehrsstunden zu verschiedenen Zeiten auftreten. Dies kann durch den Betreiber des PSTN z.B. durch eine geeignete Tarifierung gesteuert werden. Weiterhin ist es möglich, Internet-Diensteanbietern für verschiedene Zeiträume verschiedene Kontingente von Netzübergangseinheiten zuzuordnen, beispielsweise gesondert nach Tageszeit und/oder Wochentagen. Damit kann der Betreiber des PSTN äußerst flexibel auf die Anforderungen verschiedener Internet-Diensteanbieter reagieren.

Folgende Diensteanbieter können Einfluß auf das Kommunikationsnetzwerk haben:
- Betreiber des Telefonnetzes PSTN: stellt die Vermittlung der Einwahlverbindungen bis zu den Übergabepunkten bzw. Netzübergängen MG einschließlich der Signalisierung zum Steuerungselement MGC sicher,
- Großhändler bzw. Wholesaler: Besitzer der Netzübergänge und des Steuerungselementes MGC bzw. der Steuerungselemente MGC, vermietet die Netzübergangseinheiten MODEM der Netzübergänge an die Internet-Diensteanbieter ISP 1, ISP 2, .. ISP n,
- Datennetz (IP core bzw. IP Backbone) Provider: stellt die Verbindung zwischen dem Großhändler und den Internet-Diensteanbietern ISP 1, ISP 2, .. ISP n her, und
- Internet-Diensteanbieter ISP 1, ISP 2, .. ISP n: nutzen die vom Großhändler zur Verfügung gestellten Netzübergangseinheiten MODEM.
   Fallweise kann ein Diensteanbieter gleichzeitig mehrere dieser Funktionen ausüben (z.B. Betreiber des Telefonnetzes PSTN und Großhändler und IP Backbone Provider).

Die Erfindung ermöglicht folgende Vorteile für die einzelnen Organisationen:
- der Betreiber des Telefonnetzes PSTN kann in einfacher Weise die Einwahlverbindungen bis zu den Übergabepunkten bzw. Netzübergängen MG bereitstellen, ohne die Zuteilung/Aufteilung auf die Internet-Diensteanbieter ISP 1, ISP 2, .. ISP n vornehmen zu müssen,
- der Großhändler kann mit der vorliegenden Erfindung die Zuteilung/Aufteilung der vorhandenen Netzübergangseinheiten auf die Internet-Diensteanbieter ISP 1, ISP 2, .. ISP n vornehmen und überwachen, und
- der ISP bestellt Netzübergangseinheiten beim Großhändler.

Dazu wird auf dem externen Management System MS eine graphische Oberfläche installiert, die die Betreibersicht auf die einzelnen Schwellwerte pro Internet-Diensteanbieter ISP 1, ISP 2, .. ISP n zusammenfaßt und das netzweite Verwalten und zeitliche Verteilen der Netzübergangseinheiten erlaubt. Auf dem externen Management System wird ein Steuerungssystem implementiert, das die Zeitsteuerung übernimmt. Notwendige Änderungen zu Umschaltzeitpunkten, die ein Internet-Diensteanbieter ISP 1, ISP 2, .. ISP n vorher vertraglich mit dem Großhändler vereinbart hat, werden dann automatisch zur Vermittlungsstelle VS und/oder zum Steuerungselement MGC übertragen, das kann z.B. mit Hilfe von MML (für: Man Machine Language, eine Eingabesprache für Vermittlungssysteme) oder SNMP (für: Simple Network Management Protocol) erfolgen.

Überschreitet der einer Einwahlrufnummer ISP-DN zugeordnete Zähler CTR den zugeordneten Schwellwert THR, können bestimmte Aktionen ausgelöst werden. Beispielsweise wird - wie bereits erläutert - die Verbindungsanforderung abgewiesen, oder die Verbindungsanforderung wird umgeleitet. Die Umleitung kann dabei an einen sogenannten Overflow Pool oder an eine andere Vermittlungsstelle, an welche weitere dem entsprechenden Internet-Diensteanbieter ISP 1, ISP 2, .. ISP n zugeordnete Netzübergangseinheiten angeschlossen sind, erfolgen.

Ein Overflow Pool kann realisiert werden, indem allen Internet-Diensteanbietern ISP 1, ISP 2, .. ISP n ein zusätzlicher, gemeinsam genutzter Pool vom Netzübergangseinheiten MODEM zur Verfügung gestellt wird, wobei diesem Overflow Pool eine eigene, durch direkte Anwahl nicht erreichbare Einwahlrufnummer, ein Zähler und ein Schwellwert zugeordnet werden. Falls der der Einwahlrufnummer ISP-DN eines Internet-Diensteanbieters ISP 1, ISP 2, .. ISP n zugeordnete Zähler CTR den zugeordneten Schwellwert THR übersteigt, erfolgt dann eine Umleitung auf die (virtuelle) Rufnummer des Overflow Pools. Für diese Rufnummer wird die erfindungsgemäße Überprüfung des zugeordneten Zählers vorgenommen, und die Verbindungsanforderung wird entsprechend abgelehnt oder akzeptiert.

Die Netzübergangseinheiten des Overflow Pools können nach einer Best Effort Methode verwaltet werden, d.h. ohne Garantien, beispielsweise indem Verbindungsanforderungen in der Reihenfolge ihres Eingehens akzeptiert werden, bis der Schwellwert des Overflow Pools erreicht ist.

Falls eine Verbindung mittels freier Netzübergangseinheiten des Overflow Pools aufgebaut wurde, wird ein Vermerk im Call Register für eine spätere, differenzierte Vergebührung der Verbindung eingetragen.

Die vorliegende Erfindung ermöglicht folgende Funktionen für O&M (für: Operation and Maintenance)
- Schwellwertüberschreitungen und Alarme können vom Steuerungselement MGC direkt an das Management System MS gesendet werden. Mehrere Management Systeme MS (z.B. für Großhändler und Internet-Diensteanbieter) können entsprechend vorgesehen werden und entweder direkt vom Steuerungselement MGC oder einem zentralen Management System MS, beispielsweise beim Großhändler angeordnet, mit den entsprechenden Daten versorgt werden. Eine Filterfunktion kann vorgesehen werden, um für den entsprechenden Datenempfänger irrelevante Daten zu filtern.
- Für das Management System MS können Statistikfunktionen implementiert werden, die die Verwendung der Netzübergangseinheiten pro Internet-Diensteanbieter messen und dem Großhändler den Nachweis eingehaltener Verpflichtungen in Bezug auf die Bereitstellung von Netzübergangseinheiten ermöglichen. Der Großhändler kann den Internet-Diensteanbietern damit auch Statistiken zum zeitlichen und geographischen Verlauf der Netzübergangseinheitenbelegung erstellen, die von den Internet-Diensteanbietern zur Optimierung beispielsweise der Lastverteilung eingesetzt werden können.
- Das Steuerungselement MGC und/oder das (zentrale) Management System MS des Großhändlers können für Internet-Diensteanbieter ISP 1, ISP2, ISP n einen lesenden Zugriff auf die Zähler CTR des Steuerungselementes MGC erlauben. Dabei ist eine Filterfunktion nötig, die nur das Auslesen der für den jeweiligen Internet-Diensteanbieter ISP 1, ISP2, ISP n, beispielsweise der für den ersten Internet-Diensteanbieter ISP 1, relevanten Daten erlaubt. Eine Modifikation bestimmter, den Internet-Diensteanbietern ISP 1, ISP2, ISP n ISP zuzuordnender Einstellungen des Steuerungselementes (z.B. Administration bestimmter Nutzer) ist ebenfalls möglich. Sowohl Abfrage als auch Modifikation von Werten im Steuerungselement MGC bzw. im Management System MS können beispielsweise per Web-Interface des Management Systems MS oder mittels anderer Management Schnittstellen (z.B. CORBA) ausgeführt werden.
- Die Verwendung von Netzübergangseinheiten beispielsweise aufgrund garantierter Mindestbestellungen der Internet-Diensteanbieter ISP 1, ISP2, ISP n beim Großhändler oder aufgrund der Nutzung des vom Großhändler eingerichteten Overflow Pools durch einen Internet-Diensteanbieter ISP 1, ISP2, ISP n stellt unterschiedliche Kostenfaktoren für den Großhändler dar. Differenzierte Mechanismen zur Vergebührung sind daher erforderlich. Für den Vergebührungsprozeß bzw. Charging Process werden Kennzeichen erzeugt, die anzeigen, ob beispielsweise Netzübergangseinheiten des garantierten Kontingents oder des Overflow Pools für eine bestimmte Verbindung eingesetzt wurden.

Analog zu den Overflow Pools können weitere Algorithmen für die Allokation der Netzübergangseinheiten MODEM bzw. Netzübergangseinheiten eingesetzt werden:
- feste Pools,
- Pools für Gruppen von Netzübergängen MG (z.B. geographisch regionale Pools),
- zeitgesteuerte Pools, d.h. der Schwellwert THR für einen bestimmten Internet-Diensteanbieter ISP 1, ISP2, ISP n ändert sich beispielsweise abhängig von Tageszeit und Wochentag,
- garantierte, nutzerspezifische Pools,
- Pools für VPN (Virtual Private Networks).

Vorteilhaft kann die vorliegende Erfindung flexibel in Abhängigkeit der Topologie und Größe des Zugangsnetzwerks eingesetzt werden, d.h. die Stärke von Verkehrsquellen und regionale Unterschiede des Verkehrsaufkommens (z.B. verschiedene Hauptverkehrszeiten) können berücksichtigt werden, indem die einen bestimmten Internet-Diensteanbieter ISP 1, ISP2, ISP n betreffenden, in einer ersten Region eingehenden Verbindungsanforderungen zu diesem Internet-Diensteanbieter ISP 1, ISP2, ISP n zugeordneten Netzübergangseinheiten in einer zweiten Region umgeleitet werden, falls die dem Internet-Diensteanbieter ISP 1, ISP2, ISP n zugeordneten Netzübergangseinheiten der ersten Region ausgelastet sind.

Für die Begrenzung der Anzahl der unter einer Einwahlrufnummer ISP-DN gleichzeitig geführten Verbindungen kann anstelle des beschriebenen Schwellwertmechanismus ein beliebiger anderer Algorithmus vorgesehen werden. Beispielsweise kann der Zähler CTR mit der maximalen Anzahl gleichzeitig geführter Verbindungen initialisiert werden (diese Anzahl entspricht dabei dem jeweiligen Schwellwert THR), wobei dann der Zähler CTR mit jeder neuen Verbindung dekrementiert wird, bis der Zähler den Wert Null oder einen anderen, unteren Schwellwert erreicht.

## Patentansprüche

1. Verfahren zum Steuern von Verbindungen über in einem Netzübergang (MG) eines Telefonnetzes (PSTN) in ein Datennetz (IP core) angeordnete Netzübergangseinheiten (MODEM), die über mindestens zwei verschiedene Rufnummern oder Rufnummerngruppen (ISP-DN) erreichbar sind, demgemäß
- alle über die Netzübergangseinheiten (MODEM) geführten Verbindungen sowie alle über die Netzübergangseinheiten (MODEM) zu führenden angeforderten Verbindungen über dasselbe Leitungsbündel (TG) zum Netzübergang (MG) geleitet werden, und
- unter einer Rufnummer oder Rufnummerngruppe (ISP-DN) angeforderte Verbindungen in Abhängigkeit von der aktuellen Anzahl (CTR) unter dieser Rufnummer oder Rufnummerngruppe (ISP-DN) geführter Verbindungen und einer je Rufnummer oder Rufnummerngruppe (ISP-DN) vorgebbaren maximalen Anzahl (THR) gleichzeitig zugelassener Verbindungen abgewiesen oder angenommen werden.

2. Verfahren nach Anspruch 1,
**dadurch gekennzeichnet,**
**daß** jeder Rufnummer oder Rufnummerngruppe (ISP-DN) ein Zähler (CTR) zugeordnet ist, der bei Null beginnend mit jeder unter dieser Rufnummer oder Rufnummerngruppe (ISP-DN) bestehenden Verbindung inkrementiert wird, wobei weitere, unter dieser Rufnummer oder Rufnummerngruppe (ISP-DN) angeforderte Verbindungen abgewiesen werden, wenn der Wert des Zählers (CTR) die maximale Anzahl (THR) gleichzeitig zugelassener Verbindungen erreicht oder überschreitet.

3. Verfahren nach Anspruch 1,
**dadurch gekennzeichnet,**
**daß** jeder Rufnummer oder Rufnummerngruppe (ISP-DN) ein Zähler zugeordnet ist, der mit der für diese Rufnummer oder Rufnummerngruppe (ISP-DN) maximalen Anzahl (THR) gleichzeitig zugelassener Verbindungen initialisiert und mit jeder unter dieser Rufnummer oder Rufnummerngruppe (ISP-DN) bestehenden Verbindung dekrementiert wird, wobei weitere, unter dieser Rufnummer oder Rufnummerngruppe (ISP-DN) angeforderte Verbindungen abgewiesen werden, wenn der Wert des Zählers Null erreicht oder unterschreitet.

4. Verfahren nach einem der Ansprüche 1 bis 3,
**dadurch gekennzeichnet,**
**daß** die je Rufnummer oder Rufnummerngruppe (ISP-DN) vorgebbare maximale Anzahl (THR) gleichzeitig zugelassener Verbindungen automatisch zeitabhängig vorgegeben werden.

5. Verfahren nach einem der Ansprüche 1 bis 4,
**dadurch gekennzeichnet,**
**daß** die je Rufnummer oder Rufnummerngruppe (ISP-DN) vorgebbare maximale Anzahl (THR) gleichzeitig zugelassener Verbindungen durch administrative Eingaben vorgegeben werden.

6. Verfahren nach einem der Ansprüche 1 bis 5,
**dadurch gekennzeichnet,**
**daß** die verschiedenen Rufnummern oder Rufnummerngruppen (ISP-DN) verschiedenen Internet-Diensteanbietern (ISP 1, ISP2, ISP n) zugeordnet werden.

7. Verfahren nach einem der Ansprüche 1 bis 6,
**dadurch gekennzeichnet,**
**daß** bei Überschreitung der für eine Rufnummer oder Rufnummerngruppe (ISP-DN) vorgebbaren maximalen Anzahl (THR) gleichzeitig zugelassener Verbindungen Verbindungsanforderungen zu den Netzübergangseinheiten (MODEM) unter dieser Rufnummer oder Rufnummerngruppe (ISP-DN) umgeleitet werden.

8. Verfahren nach einem der Ansprüche 1 bis 7,
**dadurch gekennzeichnet,**
**daß** die Netzübergänge (MG) durch ein Steuerungselement (MGC) mittels eines Steuerungsprotokolls (MGCP) gesteuert werden, wobei die je Rufnummer oder Rufnummerngruppe (ISP-DN) vorgebbare maximale Anzahl (THR) gleichzeitig zugelassener Verbindungen in diesem Steuerungselement (MGC) durch steuernde Schwellwerte (RTC) gebildet werden und wobei über eine Signalisierungsverbindung (CCS7) zwischen dem Steuerungselement (MG) und einer Vermittlungsstelle (VS) des Telefonnetzes (PSTN) das Annehmen oder Abweisen der Verbindung signalisiert wird.

9. Verfahren nach einem der Ansprüche 1 bis 8,
**dadurch gekennzeichnet,**
**daß** für den Fall der Überschreitung der für eine Rufnummer oder Rufnummerngruppe (ISP-DN) vorgebbaren maximalen Anzahl (THR) gleichzeitig zugelassener Verbindungen für alle Rufnummern oder Rufnummerngruppen (ISP-DN) gemeinsam oder für jede Rufnummer oder Rufnummerngruppe (ISP-DN) gesondert oder für Gruppen von Rufnummern oder Rufnummerngruppen (ISP-DN) gesondert mindestens ein Overflow Pool eingerichtet wird, wobei dem Overflow Pool ein gesonderter Zähler und eine gesonderte maximale Anzahl gleichzeitig geführter Verbindungen zugewiesen wird und wobei auf den Overflow Pool geleitete Verbindungsanforderungen in Abhängigkeit vom aktuellen Wert des gesonderten Zählers und der gesonderten maximalen Anzahl gleichzeitig geführter Verbindungen abgewiesen oder angenommen werden und wobei bei Überschreitung der für eine Rufnummer oder Rufnummerngruppe (ISP-DN) vorgebbaren maximalen Anzahl (THR) gleichzeitig zugelassener Verbindungen Verbindungsanforderungen zu den Netzübergangseinheiten (MODEM) unter dieser Rufnummer oder Rufnummerngruppe (ISP-DN) auf den Overflow Pools umgeleitet werden.
